# FASCICULE DE BREVET EUROPEEN

(11) **EP 4 204 252 B1**
(45) Date de publication et mention de la délivrance du brevet: **29.05.2024**
(21) Numéro de dépôt: 21743224.4
(22) Date de dépôt: 28.06.2021
(51) Int. Cl.: B60L 58/14, B60L 58/20, B60W 50/038, B60R 16/033, B60W 50/14, H02J 1/08, H02J 7/34, B60L 3/00, B60W 20/50, B60W 50/029

(54) **VÉHICULE COMPRENANT UNE BATTERIE DE SERVITUDE**
FAHRZEUG UMFASSEND EINE BORDBATTERIE
VEHICLE COMPRISING A SERVICE BATTERY

(30) Priorité: 25.08.2020 FR 2008662
(43) Date de publication de la demande: 05.07.2023
(73) Titulaire: Stellantis Auto SAS, 78300 Poissy (FR)
(72) Inventeur: BALENGHIEN, Olivier, 93390 CLICHY SOUS BOIS (FR); DE CROUTTE, Arnaud, 78530 BUC (FR)
(86) Numéro de dépôt international: PCT/FR2021/051178
(87) Numéro de publication internationale: WO 2022/043622

(56) Documents cités:
- EP-A1- 3 616 974
- DE-A1-102017 011 012
- FR-A1- 3 009 869
- US-A1- 2017 320 396

## Description

La présente invention concerne un véhicule comprenant un dispositif de surveillance de la recharge d'une batterie de réseau de bord d'un véhicule à propulsion électrique ou hybride.

Ce véhicule comprend par exemple :
- un réseau de puissance,
- une batterie principale pour la motricité, alimentant ce réseau de puissance,
- une machine motrice électrique alimentée en puissance par ce réseau de puissance,
- un premier chargeur embarqué dit OBC pour l'acronyme anglais « on board charger » électriquement couplé au réseau de puissance et apte à recharger la batterie principale par un réseau de distribution de courant terrestre lorsque le véhicule y est raccordé, par exemple via une borne de recharge publique,
- un réseau de bord,
- une batterie secondaire, dite de servitude, alimentant le réseau de bord à une tension continue généralement inférieure à la tension de la batterie principale,
- un second chargeur embarqué dit OBCDC pour l'acronyme anglais « on board charger direct current » couplant électriquement le réseau de puissance au réseau de bord de sorte à recharger cette batterie secondaire en prélevant du courant de la batterie principale,
- un calculateur superviseur, relié à chacun de ces dispositifs.

Ce second chargeur comprend un convertisseur de courant continu-continu de sorte à gérer la différence de niveau de tension entre les deux batteries, et la recharge de la seconde batterie.

Ce réseau de bord alimente des dispositifs de sécurité du véhicule. Par exemple, ce réseau alimente des calculateurs dont le calculateur superviseur, un dispositif anti-patinage des roues du véhicule, une direction assistée électrique du véhicule, un système de frein électrique. Ces systèmes de sécurité sont des consommateurs de courant, si bien que cette batterie secondaire doit toujours avoir une réserve d'énergie suffisante pour ces fonctions sécuritaires, et être régulièrement rechargée. Ce second chargeur et la seconde batterie sont donc habituellement diagnostiqués sur leur bon fonctionnement.

On connait par exemple du document de brevet FR-A1 -3009869 un procédé de détection d'un défaut de connexion entre une batterie et un convertisseur continu-continu rechargeant cette batterie, par l'envoi d'un signal en tension spécifique à travers la batterie et provenant du convertisseur. S'il est diagnostiqué un défaut de connexion pendant une durée supérieure à un seuil de durée, un message d'alerte est émis, et des mesures de sauvegarde sont prises. Ce message d'alerte est un voyant allumé à un tableau de bord ou une alarme sonore, qui est prise en compte ou non par le conducteur.

Il subsiste donc un risque sécuritaire pour le conducteur et ses passagers, en particulier quand l'état de charge de la batterie de servitude n'est plus suffisant pour assurer l'alimentation des dispositifs sécuritaires précités et que le conducteur ignore l'alerte ou tarde à la prendre en compte.

Le but principal de l'objet de l'invention est de proposer une amélioration sécuritaire en cas de non recharge de cette batterie, au juste nécessaire pour permettre un roulage tant que cela est techniquement possible.

De façon à atteindre le but principal, l'invention a pour objet un véhicule automobile comprenant :
- un convertisseur de courant comprenant un dispositif de contrôle du convertisseur,
- un calculateur de supervision du véhicule relié au dispositif de contrôle du convertisseur,
- un premier réseau électrique et un deuxième réseau électrique interconnectés par le convertisseur de courant,
ce deuxième réseau électrique comprenant une batterie de servitude rechargée par le convertisseur de courant, le dispositif de contrôle du convertisseur étant agencé de sorte à envoyer une alerte au calculateur de supervision en cas de disfonctionnement de la recharge de la batterie de servitude par le convertisseur de courant, le calculateur de supervision étant configuré de sorte à vérifier la persistance de l'alerte après un temps prédéterminé, ce véhicule comprenant en outre un boîtier de détermination de l'état de charge de la batterie de servitude relié au calculateur de supervision, le calculateur de supervision étant configuré de sorte à commander l'immobilisation du véhicule lorsque l'état de charge de la batterie de servitude est inférieur à un seuil prédéterminé et que la persistance de l'alerte est vérifiée.

Ainsi, tout en évitant de prendre en compte une fausse alerte, ou une alerte furtive, l'attention du conducteur n'est plus nécessaire pour éviter une situation dangereuse pouvant aboutir à un accident, tout en laissant la possibilité au conducteur de poursuivre sa route lorsque l'état de charge de la batterie de servitude le permet encore.

Selon un mode de réalisation de l'invention, le calculateur de supervision est configuré de sorte à émettre un signal d'alerte à un tableau de bord du véhicule lorsque la persistance de l'alerte est vérifiée, et indépendamment de l'état de charge de la batterie de servitude.

Ainsi, si le conducteur prend en compte ce signal d'alerte dès son apparition, il pourra de lui-même arrêter le véhicule dans une zone sécurisée avant que ce véhicule soit immobilisé par le calculateur de supervision.

Selon un mode de réalisation de l'invention, le calculateur de supervision comprend une mémoire configurée de sorte à stocker de façon permanente et cumulative un code défaut à chaque persistance de l'alerte vérifiée.

Selon un mode de réalisation de l'invention, le calculateur de supervision est configuré de sorte à enclencher un mode dégradé de fonctionnement du véhicule si la persistance de l'alerte est vérifiée.

Selon un mode de réalisation de l'invention, le véhicule comprend un équipement électrique non sécuritaire, le calculateur de supervision étant configuré de sorte que le mode dégradé comprenne une désactivation de l'équipement électrique non sécuritaire.

Cette mesure permet de limiter la décroissance de l'état de charge de la batterie de servitude, de sorte, par exemple, que le seuil prédéterminé soit franchi plus tardivement.

Selon un mode de réalisation de l'invention, le véhicule comprend une machine motrice électrique alimentée par le premier réseau électrique, le calculateur de supervision étant configuré de sorte que le mode dégradé comprenne une limitation non nulle de la puissance consommée par la machine motrice électrique tant que l'état de charge de la batterie de servitude est supérieur strictement au seuil prédéterminé.

Cette mesure a au moins deux avantages :
- elle permet d'avoir un impact sur le comportement du véhicule obligatoirement perceptible par le conducteur, qui s'interroge alors sur un éventuel problème, l'incitant à regarder le tableau de bord dans lequel un voyant « stop » est allumé.
- elle diminue la vitesse du véhicule ce qui, en cas de disfonctionnement d'un système de frein du véhicule (ou autre système sécuritaire comme l'alimentation des calculateurs) à cause d'un état de charge de la batterie de servitude trop faible, améliore la situation en la rendant moins critique.

Selon un mode de réalisation de l'invention, le véhicule est à motricité uniquement électrique.

Selon un mode de réalisation de l'invention, la machine motrice électrique est l'unique machine motrice.

Selon un mode de réalisation de l'invention, le calculateur de supervision est configuré de sorte que la limitation de la puissance consommée par la machine motrice électrique est fonction de l'état de charge de la batterie de servitude.

Selon un mode de réalisation de l'invention, le calculateur de supervision est configuré de sorte que la limitation de la puissance consommée par la machine motrice électrique est comprise entre 4KW et 8KW.

D'autres particularités et avantages apparaîtront à la lecture de la description ci-après d'un mode particulier de réalisation, non limitatif de l'invention, faite en référence aux figures dans lesquelles :

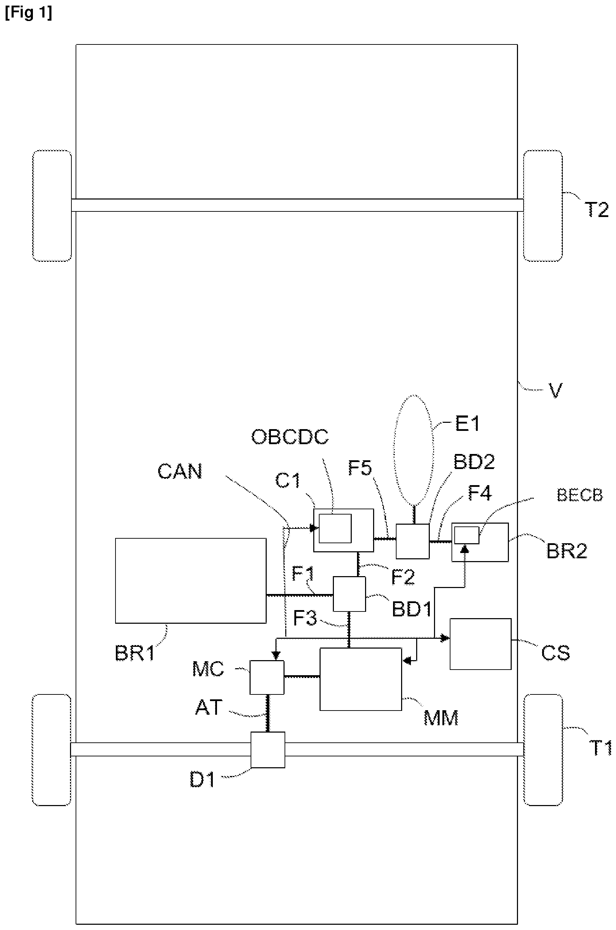

[Fig 1] : La figure 1, figure unique, représente un schéma d'un véhicule selon l'invention.

La figure 1 représente un exemple de véhicule V selon l'invention. Ce véhicule V comprend :
- un convertisseur de courant C1 comprenant un dispositif de contrôle du convertisseur OBCDC,
- un réseau de communication CAN,
- un calculateur de supervision CS du véhicule relié au dispositif de contrôle du convertisseur OBCDC par le réseau de communication CAN,
- un premier réseau électrique et un deuxième réseau électrique interconnectés par le convertisseur de courant C1, ce deuxième réseau électrique comprenant une batterie de servitude BR2 rechargée par le convertisseur de courant C1,
- un dispositif de sécurité E1 du véhicule alimenté par la batterie de servitude (BR2),
- un boîtier BECB de détermination de l'état de charge de la batterie de servitude BR2 relié au calculateur de supervision CS par le réseau de communication CAN.

le dispositif de contrôle du convertisseur OBCDC est agencé de sorte à envoyer une alerte au calculateur de supervision CS en cas de disfonctionnement de la recharge de la batterie de servitude BR2 par le convertisseur de courant C1, le calculateur de supervision CS étant de sorte à vérifier la persistance de l'alerte après un temps prédéterminé, et à commander l'immobilisation du véhicule V lorsque l'état de charge de la batterie de servitude est inférieur à un seuil prédéterminé et que la persistance de l'alerte est vérifiée.
Ce véhicule comprend en outre :
- une batterie de traction BR1 rechargeable,
- une chaîne de transmission comportant au moins une machine motrice électrique MM fournissant du couple pour entraîner au moins un train T1 à partir de l'énergie stockée dans la batterie de traction BR1 rechargeable.

Le premier réseau électrique et le deuxième réseau électrique sont deux réseaux fonctionnant respectivement sous une première tension et une deuxième tension, ces tensions étant par exemple différentes, le convertisseur de courant C1 adaptant la tension d'un réseau à l'autre selon le sens du courant souhaité, dans le cas d'un convertisseur C1 réversible pour transférer du courant de la batterie de servitude BR2 à la batterie de traction BR1 et inversement. Ce convertisseur de courant C1 est par exemple un convertisseur de courant continu / continu, mais pas nécessairement. Sur la figure 1 ce convertisseur C1 est représenté en dehors de la batterie de traction BR1 et de la batterie de servitude BR2, mais ce n'est pas obligatoire et il peut être intégré par exemple dans la batterie de traction BR1, au niveau de ses modules ou même de ses cellules.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule comprenant une chaîne de transmission comportant au moins une machine motrice électrique produisant du couple pour entraîner au moins un train (par exemple de roues). Par conséquent, l'invention concerne au moins les véhicules terrestres.

On entend par « machine motrice électrique », dans tout le texte de ce document, une machine (ou un moteur) électrique agencé(e) de manière à fournir ou récupérer du couple pour déplacer un véhicule, soit seul(e) soit en complément d'au moins une éventuelle autre machine motrice électrique ou thermique (comme par exemple un moteur thermique (réacteur, turboréacteur ou moteur chimique)).

On entend ici par « équipement électrique », dans tout le texte de ce document, un équipement électrique alimenté par la batterie de servitude BR2 sans utiliser le convertisseur de courant C1, qui a besoin d'une quantité d'énergie électrique plus ou moins forte pour fonctionner et qui peut éventuellement assurer une fonction sécuritaire et donc comprend le dispositif de sécurité E1. Ce dispositif de sécurité E1 est par exemple un bloc optique, ou un essuie-glace, ou un calculateur comme le calculateur de supervision CS ou le dispositif de contrôle du convertisseur OBCDC ou le boîtier BECB de détermination de l'état de charge de la batterie de servitude BR2 ou une direction assistée électrique, un système de frein électrique (notamment de parking) ou aide au freinage électrique. Cette liste n'est pas exhaustive, et ces dispositifs de sécurités E1 peuvent bien entendu être combinés voire pris dans leur ensemble.

En outre, le calculateur de supervision CS peut comprendre une table dans sa mémoire discriminant les équipements sécuritaires des équipements non sécuritaires, l'état de cette table étant dynamique, c'est-à-dire fonction d'une caractéristique évoluant dans le temps.

Pour illustrer cette dynamique, on prendra comme exemple d'équipement électrique un système de climatisation: ce système comprend plusieurs fonctions dont au moins deux principales sont le refroidissement ou réchauffement de l'habitacle, et le désembuage d'un pare-brise garantissant une bonne visibilité pour le conducteur. La fonction refroidissement ou réchauffement est par exemple déclarée comme non sécuritaire dans la table, alors que la fonction désembuage est déclarée sécuritaire dans la table. Ainsi l'équipement électrique du système de climatisation sera un équipement non sécuritaire lorsqu'il est configuré pour la fonction refroidissement ou réchauffement, et sera un équipement sécuritaire dès lors qu'il sera configuré pour la fonction désembuage.

La figure 1 n'illustre qu'un équipement électrique, notamment le dispositif de sécurité E1, mais le véhicule V comprend d'autres équipements électriques non sécuritaires, non représentés, comme par exemple le dispositif de climatisation lorsqu'il est configuré pour la fonction refroidissement ou réchauffement de l'habitacle, un combiné radio, un système de chauffage des sièges, un système de dégivrage (et plus généralement d'un équipement comportant au moins un composant résistif), cette liste n'étant pas exhaustive. On notera cependant que le dispositif de climatisation est un équipement électrique qui consomme, lorsqu'il est activé, une quantité de courant importante, que ce soit une technologie de pompe à chaleur ou utilisant un compresseur.

Dans l'exemple illustré non limitativement sur l'unique figure, la chaîne de transmission est de type tout électrique (et ne comprend qu'une unique machine motrice électrique MM). Mais l'invention n'est pas limitée à ce type de chaîne de transmission. En effet, la chaîne de transmission pourrait être de type hybride en comportant en complément une machine motrice thermique associée à au moins un train (par exemple le second T2).

La chaîne de transmission comprend ici, en complément de la machine motrice électrique MM, des moyens de couplage MC et un arbre de transmission AT. Le contrôle d'au moins la machine motrice électrique MM et des moyens de couplage MC est assuré par le calculateur de supervision CS via le réseau de communication CAN.

Les moyens de couplage MC sont ici chargés de coupler/découpler la machine motrice électrique MM à/de l'arbre de transmission AT, sur ordre du calculateur de supervision CS, afin de communiquer du couple qu'elle produit et qui est défini par une consigne (de couple ou de régime), grâce à l'énergie électrique stockée dans la batterie de traction BR1, à l'arbre de transmission AT. Ce dernier AT est ici couplé au premier train T1 (ici de roues).

Par exemple, le premier train T1 est situé à l'avant du véhicule V, et de préférence, et comme illustré, couplé à l'arbre de transmission AT via un différentiel (ici avant) D1. Mais dans une variante ce premier train T1 pourrait être situé à l'arrière du véhicule V.

Les moyens de couplage MC peuvent, par exemple, être un mécanisme à crabots ou un embrayage ou un convertisseur de couple hydraulique ou encore un frein. Ils peuvent prendre au moins deux états de couplage : un premier (couplé) dans lequel ils assurent le couplage de la machine motrice électrique MM à l'arbre de transmission AT et un second (découplé) dans lequel ils découplent la machine motrice électrique MM de l'arbre de transmission AT. On notera qu'ils peuvent, également et éventuellement, prendre au moins un état intermédiaire (par exemple pour un glissement d'embrayage).

La batterie de traction BR1 est agencée pour stocker de l'énergie électrique sous la première tension. Elle peut notamment être rechargée via un chargeur (non représenté) destiné à être raccordé à une source d'alimentation en courant externe, comme par exemple une borne de recharge ou une prise de courant du secteur, via un cordon de charge dédié.

La machine motrice électrique MM fournit du couple (ici pour entraîner le premier train T1) en consommant de l'énergie stockée sous la première tension dans la batterie de traction BR1.

Par exemple, la première tension peut être comprise entre 200 V et 600 V. A titre d'exemple illustratif, cette première tension peut être égale à 400 V.

La seconde batterie BR2 est agencée pour stocker de l'énergie électrique sous la deuxième tension qui est inférieure à la première tension. Elle peut notamment être rechargée via le convertisseur de courant C1.

Par exemple, la deuxième tension peut être comprise entre 11 V et 24 V. A titre d'exemple illustratif, cette deuxième tension peut être égale à 12 V.

Les équipements électriques du véhicule V consomment de l'énergie stockée sous la deuxième tension (minimale) dans la seconde batterie BR2, du fait qu'ils consomment peu d'énergie électrique. Ils sont donc couplés à cette seconde batterie BR2 via le deuxième réseau.

Le convertisseur de courant C1 est couplé aux batterie de traction BR1 et batterie de servitude BR2, et chargé de convertir la première tension en deuxième tension, notamment pour recharger la batterie de servitude BR2.

Ce véhicule peut comprendre d'autres convertisseurs (non représentés) couplés à la batterie de traction BR1, est propres à être couplés à d'autres batteries ou d'autres équipements électriques, et convertissant la première tension (de la batterie de traction BR1) en une troisième tension, comprise entre les première et deuxième tensions.

Par exemple, la troisième tension peut être comprise entre 40 V et 70 V. A titre d'exemple illustratif, cette troisième tension peut être égale à 48 V ou 60 V.

On notera, comme illustré non limitativement sur l'unique figure, que le véhicule V peut également comprendre un premier boîtier de distribution électrique BD1 connecté à la batterie de traction BR1, au convertisseur de courant C1, et à la machine motrice MM. La connexion entre le premier boîtier de distribution électrique BD1 et la batterie de traction BR1 se fait via un premier faisceau électrique F1. La connexion entre le premier boîtier de distribution électrique BD1 et le convertisseur C1 se fait via un deuxième faisceau électrique F2. La connexion entre le premier boîtier de distribution électrique BD1 et la machine motrice électrique MM se fait via un troisième faisceau électrique F3. Le premier réseau électrique, dit réseau de puissance, comprend par exemple la batterie de traction BR1, les premier, deuxième, et troisième faisceaux électriques F1, F2, F3, et le premier boitier de distribution électrique BD1.

On notera également, comme illustré non limitativement sur l'unique figure, que le véhicule V comprend un deuxième boîtier de distribution électrique BD2 connecté à la batterie de servitude BR2 et au convertisseur C1. La connexion entre le deuxième boîtier de distribution électrique BD2 et la batterie de servitude BR2 se fait via un quatrième faisceau électrique F4. La connexion entre le deuxième boîtier de distribution électrique BD2 et le premier convertisseur C1 se fait via un cinquième faisceau électrique F5. Le deuxième réseau, di réseau de bord, comprend par exemple la batterie de servitude BR1, les quatrième, cinquième faisceaux électriques F5, F5, et le deuxième boitier de distribution électrique BD2.

Ces boitiers de distribution électrique BD1, BD2, sont par exemple contrôlés par le calculateur de supervision CS, même s'il n'est pas représenté de réseau de communication les concernant sur la figure 1.

Par exemple, chaque boîtier de distribution électrique peut assurer une fonction de protection au moyen, notamment, de fusibles adaptés aux tensions concernées, et éventuellement de composants de commutation de puissance, tels que des relais, selon les besoins fonctionnels.

Dans une telle architecture électrique, le boîtier BECB de détermination de l'état de charge de la batterie de servitude BR2 est un organe de diagnostic qui permet de faire un diagnostic de la batterie de servitude BR2 en continu et calcule en permanence l'état de charge de la batterie de servitude à partir de valeurs mesurées de courant, tension, et température aux bornes de la batterie. On notera que le véhicule comprend un second boîtier (non représenté) de détermination de l'état de charge pour la batterie de traction BR1.

Ce boîtier BECB est initialisé lors de sa fabrication. Classiquement, ce boîtier BECB est recalé lorsque la batterie de servitude BR2 est au repos depuis plusieurs heures.

Le réseau de communication CAN (Controller Area Network) est représenté par des traits fins munis de flèches, mais les informations échangées entre le calculateur de supervision CS et le boîtier BECB de détermination de l'état de charge, le dispositif de contrôle du convertisseur OBCDC, par ce réseau de communication CAN sont bien dans les deux sens. Ce réseau de communication CAN est par exemple un bus de données multiplexé raccordant à ce même bus un grand nombre de calculateurs qui communiquent à tour de rôle, mais ce n'est pas obligatoire.

L'alerte est un code envoyé par le dispositif de contrôle du convertisseur OBCDC au calculateur de supervision CS via le réseau de communication CAN.

Le disfonctionnement de la recharge de la batterie de servitude BR2 par le convertisseur de courant C1 et détecté par exemple par le dispositif de contrôle du convertisseur OBCDC exécutant un procédé de détection tel que décrit dans le document de brevet FR-A1-3009869 précédemment cité. Ce procédé de détection est par exemple tel qu'il ajoute un signal de tension prédéfini comportant un ou plusieurs signaux périodiques à une composante de tension continue délivrée par le convertisseur de courant C1 au deuxième réseau électrique comprenant la batterie de servitude BR2, et mesure un courant traversant la batterie de servitude BR2 en y recherchant un signal d'intensité de courant comportant un ou plusieurs signaux périodiques correspondant au signal de tension ajouté, pour vérifier que la batterie de servitude BR2 est bien connectée au deuxième réseau.

Mais ce disfonctionnement de la recharge peut provenir également d'un défaut interne au convertisseur C1, par exemple dû à une température excessive de la partie puissance de ce dernier, ce défaut étant directement émis du dispositif de contrôle du convertisseur OBCDC vers le calculateur de supervision CS, toujours via le réseau de communication CAN.

Lorsque cette alerte est présente, le calculateur de supervision (CS) vérifie la persistance de cette alerte après un temps prédéterminé, par exemple après une temporisation paramétrable de, par exemple, entre 10 et 60 secondes, notamment 30 secondes, initialisée dès la première apparition de l'alerte. Cette vérification est réalisée par le calculateur CS de façon continue pendant ce temps prédéterminé, ou en variante, ponctuellement à la fin de ce temps prédéterminé.

Le seuil prédéterminé d'état de charge de la batterie de servitude BR2 est également paramétrable, par exemple correspondant à un état de charge entre 20% et 50% de la batterie de servitude BR2, notamment 50%.

Pour immobiliser le véhicule V, le calculateur de supervision, par exemple, priorise une consigne de décélération du véhicule V jusqu'à l'arrêt, au détriment de toute demande contraire du conducteur. Dans ce but, le calculateur de supervision CS agira sur un système de freinage du véhicule, ou commandera la machine motrice électrique MM en mode générateur, ou pilotera un embrayage d'un moteur thermique du véhicule dans un état embrayé de sorte à utiliser le frein moteur du moteur thermique, ou simultanément la fermeture des deux embrayages d'une boîte de vitesses à double embrayage, cette liste n'étant pas exhaustive.

On comprendra par batterie de servitude BR2 dans tout le texte de ce document, une batterie appartenant au deuxième réseau électrique, c'est-à-dire fonctionnant sous la deuxième tension (notamment 12V) qui est inférieure à la première tension.

On comprendra par batterie de traction BR1 dans tout le texte de ce document, une batterie appartenant au premier réseau électrique, c'est-à-dire fonctionnant sous la première tension qui est supérieure à la deuxième tension, et qui alimente en courant la machine motrice électrique MM. Cette batterie de traction BR1 a une capacité de stockage d'énergie généralement très supérieure à la batterie de servitude BR2.

On comprendra par batterie, dans tout le texte de ce document, un ensemble comprenant au moins un module de batterie contenant au moins une cellule électrochimique. Cette batterie comprend éventuellement des moyens électriques ou électroniques pour la gestion d'énergie électrique de ce au moins un module, comme par exemple le boîtier BECB de détermination de l'état de charge. Lorsqu'il y a plusieurs modules, ils sont regroupés dans un bac ou carter et forment alors un bloc batteries, ce bloc batteries étant souvent désigné par l'expression anglaise « pack batteries », ce carter contenant généralement une interface de montage, et des bornes de raccordement.

Par ailleurs, on comprendra par cellule électrochimique dans tout le texte de ce document, des cellules générant du courant par réaction chimique, par exemple de type lithium-ion (ou Li-ion), de type Ni-Mh, ou Ni-Cd ou encore plomb.

Ce véhicule comprend le tableau de bord, et le calculateur de supervision CS est configuré de sorte à émettre un signal d'alerte au tableau de bord, par exemple l'allumage d'un voyant « stop », lorsque la persistance de l'alerte est vérifiée par le calculateur de supervision CS, et indépendamment de l'état de charge de la batterie de servitude BR2.

Ce calculateur de supervision CS comprend une mémoire configurée de sorte à stocker de façon permanente et cumulative un code défaut à chaque persistance de l'alerte vérifiée. Ce code défaut pourra alors être lu par un dispositif de diagnostic d'atelier, en service après-vente par exemple.

Le calculateur de supervision CS est en outre configuré de sorte à enclencher un mode dégradé de fonctionnement du véhicule si la persistance de l'alerte est vérifiée.

Ce calculateur de supervision CS enclenche le mode dégradé par exemple dès qu'il a confirmé la persistance de l'alerte, mais pas obligatoirement, ce déclenchement pouvant être conditionné par exemple sur le franchissement d'un second seuil prédéterminé d'état de charge de la batterie de servitude BR2, ce second seuil étant supérieur au seuil prédéterminé. Ainsi, tant que l'état de charge de la batterie de servitude BR2 est supérieur strictement à ce second seuil prédéterminé, le mode dégradé n'est pas enclenché, puis enclenché lorsque l'état de charge de la batterie de servitude BR2 est compris entre le seuil prédéterminé et le second seuil prédéterminé. Ce second seuil prédéterminé d'état de charge de la batterie de servitude BR2 est également paramétrable, par exemple correspondant à un état de charge entre 80% et 100% de la batterie de servitude BR2, notamment 90%. Une autre variante consiste par exemple à enclencher le mode dégradé après une seconde temporisation initialisée dès la confirmation de la persistance de l'alerte, cette seconde temporisation étant paramétrable par exemple de 30 secondes à 10 minutes.

Ce mode dégradé comprend par exemple une désactivation de l'équipement électrique non sécuritaire comme le dispositif de climatisation configuré pour sa fonction refroidissement ou réchauffement de l'habitacle, ou le système de chauffage des sièges, le système de dégivrage (et plus généralement un équipement comportant au moins un composant résistif), cette liste n'étant pas exhaustive. On notera que si la configuration du le dispositif de climatisation change pour réaliser la fonction de désembuage, ce dispositif de climatisation devient l'équipement de sécurité E1 et le calculateur de supervision réactive alors le dispositif de climatisation pour cette fonction de désembuage.

En outre, le calculateur de supervision CS est configuré de sorte que le mode dégradé comprenne une limitation non nulle de la puissance consommée par la machine motrice électrique MM tant que l'état de charge de la batterie de servitude BR2 est supérieur strictement au seuil prédéterminé.

Ce véhicule est par exemple à motricité uniquement électrique, la machine motrice électrique étant l'unique machine motrice MM du véhicule.

La limitation de la puissance consommée par la machine motrice électrique MM est par exemple fonction de l'état de charge de la batterie de servitude BR2 : plus l'état de charge de la batterie BR2 est proche du seuil prédéterminé, plus la limitation est importante et moins la puissance disponible pour la machine motrice électrique MM sera grande.

La limitation de la puissance consommée par la machine motrice électrique MM est par exemple comprise entre 4KW et 8KW. Ainsi la puissance disponible pour la machine motrice électrique MM est réduite à une valeur comprise entre 4KW et 8KW.

L'invention propose notamment de mettre en oeuvre, au sein du véhicule V, un procédé de sécurisation du véhicule V en cas de disfonctionnement de la recharge de la batterie de servitude BR2 du véhicule V.

Cette mise en oeuvre peut se faire au moyen du calculateur de supervision CS et du dispositif de contrôle du convertisseur OBCDC et du boîtier BECB de détermination de l'état de charge de la batterie de servitude BR2 qui, comme illustrés non limitativement sur la figure 1, sont des dispositifs distincts. Mais ce n'est pas obligatoire et ils peuvent être tous regroupés (ou en partie regroupés) dans un calculateur dédié, ce dernier recevant les données nécessaires de différents capteurs disposés dans le véhicule, via le réseau CAN par exemple. Ce calculateur dédié, ou le calculateur de supervision CS et du dispositif de contrôle du convertisseur OBCDC et du boîtier BECB de détermination de l'état de charge de la batterie de servitude BR2, comprennent un éventuel programme dédié, par exemple. Par conséquent, un calculateur ou dispositif de contrôle ou le boîtier BECB, selon l'invention, peuvent être réalisés sous la forme de modules logiciels (ou informatiques (ou encore « software »)), ou bien de circuits électroniques (ou « hardware »), ou encore d'une combinaison de circuits électroniques et de modules logiciels ».

Ainsi l'invention porte également sur un procédé de sécurisation du véhicule V tel que précédemment décrit, ce procédé étant mis en oeuvre par le calculateur de supervision CS, le dispositif de contrôle du convertisseur OBCDC, et le boîtier BECB de détermination de l'état de charge de la batterie de servitude BR2 selon l'exemple illustré sur la figure 1.

Ce procédé comprend par exemple l'exécution successive:
- d'une première étape détectant le disfonctionnement de la recharge de la batterie de servitude BR2 par le convertisseur de courant C1,
- d'une deuxième étape vérifiant la persistance du disfonctionnement après le temps prédéterminé, et dans l'affirmative :
- d'une troisième étape émettant un signal d'alerte au tableau de bord
- d'une quatrième étape déterminant l'état de charge de la batterie de servitude BR2,
- d'une cinquième étape immobilisant le véhicule V si l'état de charge de la batterie de servitude BR2 est inférieur au seuil prédéterminé,
- d'une sixième étape activant un mode dégradé de fonctionnement du véhicule, ce mode comprenant une limitation non nulle de la puissance consommée par la machine motrice électrique tant que l'état de charge de la batterie de servitude est supérieur strictement au seuil prédéterminé.

Le calculateur de supervision CS, le dispositif de contrôle du convertisseur OBCDC, et le boîtier BECB de détermination de l'état de charge de la batterie de servitude BR2, ou le calculateur dédié, comprennent les moyens d'acquisition, de traitement par instructions logicielles stockées dans une mémoire ainsi que les moyens de commande requis à mise en oeuvre du procédé tel que précédemment décrit.

## Revendications

1. Véhicule comprenant :
- un convertisseur de courant (C1) comprenant un dispositif de contrôle du convertisseur (OBCDC),
- un calculateur de supervision (CS) du véhicule relié au dispositif de contrôle du convertisseur (OBCDC),
- un premier réseau électrique et un deuxième réseau électrique interconnectés par le convertisseur de courant (C1),
ce deuxième réseau électrique comprenant une batterie de servitude (BR2) rechargée par le convertisseur de courant (C1), le dispositif de contrôle du convertisseur (OBCDC) étant agencé de sorte à envoyer une alerte au calculateur de supervision (CS) en cas de disfonctionnement de la recharge de la batterie de servitude par le convertisseur de courant (C1), le calculateur de supervision (CS) étant configuré de sorte à vérifier la persistance de l'alerte après un temps prédéterminé, **caractérisé en ce que** le véhicule (V) comprend un boîtier (BECB) de détermination de l'état de charge de la batterie de servitude (BR2) relié au calculateur de supervision (CS), le calculateur de supervision (CS) étant configuré de sorte à commander l'immobilisation du véhicule (V) lorsque l'état de charge de la batterie de servitude (BR2) est inférieur à un seuil prédéterminé et que la persistance de l'alerte est vérifiée.

2. Véhicule selon la revendication 1 comprenant un tableau de bord, **caractérisé en ce que** le calculateur de supervision (CS) est configuré de sorte à émettre un signal d'alerte au tableau de bord lorsque la persistance de l'alerte est vérifiée, et indépendamment de l'état de charge de la batterie de servitude.

3. Véhicule selon l'une des revendications précédentes, **caractérisé en ce que** le calculateur de supervision (CS) comprend une mémoire configurée de sorte à stocker de façon permanente et cumulative un code défaut à chaque persistance de l'alerte vérifiée.

4. Véhicule selon l'une des revendications précédentes, **caractérisé en ce que** le calculateur de supervision (CS) est configuré de sorte à enclencher un mode dégradé de fonctionnement du véhicule (V) si la persistance de l'alerte est vérifiée.

5. Véhicule selon la revendication 4, le véhicule comprenant un équipement électrique non sécuritaire, **caractérisé en ce que** le calculateur de supervision (CS) est configuré de sorte que le mode dégradé comprenne une désactivation de l'équipement électrique non sécuritaire.

6. Véhicule selon la revendication 4 ou 5, le véhicule comprenant une machine motrice électrique (MM) alimentée par le premier réseau électrique, **caractérisé en ce que** le calculateur de supervision (CS) est configuré de sorte que le mode dégradé comprenne une limitation non nulle de la puissance consommée par la machine motrice électrique (MM) tant que l'état de charge de la batterie de servitude (BR2) est supérieur strictement au seuil prédéterminé.

7. Véhicule selon la revendication 6, **caractérisé en ce que** le véhicule est à motricité uniquement électrique.

8. Véhicule selon la revendication 7, **caractérisé en ce que** la machine motrice électrique (MM) est l'unique machine motrice.

9. Véhicule selon la revendication 8, **caractérisé en ce que** le calculateur de supervision (CS) est configuré de sorte que la limitation de la puissance consommée par la machine motrice électrique (MM) est fonction de l'état de charge de la batterie de servitude (BR2).

10. Véhicule selon la revendication 8 ou 9, **caractérisé en ce que** le calculateur de supervision (CS) est configuré de sorte que la limitation de la puissance consommée par la machine motrice électrique (MM) est comprise entre 4KW et 8KW.

## Patentansprüche

1. Fahrzeug umfassend:
- einen Stromwandler (C1), der ein Wandlersteuergerät (OBCDC) umfasst,
- einen Fahrzeugüberwachungscomputer (CS), der mit dem Wandlersteuergerät (OBCDC) verbunden ist,
- ein erstes elektrisches Netzwerk und ein zweites elektrisches Netzwerk, die dadurch miteinander verbunden sind Stromwandler (C1),
wobei dieses zweite Stromnetz eine durch den Stromwandler (C1) aufgeladene Versorgungsbatterie (BR2) umfasst, wobei die Wandlersteuervorrichtung (OBCDC) so angeordnet ist, dass sie einen Alarm an den Überwachungscomputer (CS) sendet im Falle einer Störung beim Laden der Nutzbatterie durch den Stromwandler (C1), wobei der Überwachungscomputer (CS) so konfiguriert ist, dass er das Fortbestehen der Warnung nach einer vorbestimmten Zeit überprüft, **dadurch gekennzeichnet, dass** das Fahrzeug (V) umfasst eine Box (BECB) zum Bestimmen des Ladezustands der Netzbatterie (BR2), die mit dem Überwachungscomputer (CS) verbunden ist, wobei der Überwachungscomputer (CS) so konfiguriert ist, dass er die Immobilisierung des Fahrzeugs (V) steuert, wenn der Zustand erreicht ist Der Ladezustand der Netzbatterie (BR2) liegt unter einem vorgegebenen Schwellenwert und das Fortbestehen der Warnung wird überprüft.

2. Fahrzeug nach Anspruch 1 mit einem Armaturenbrett, **dadurch gekennzeichnet, dass** der Überwachungscomputer (CS) so konfiguriert ist, dass er ein Warnsignal an das Armaturenbrett sendet, wenn das Fortbestehen der Warnung überprüft wird, und unabhängig vom Ladezustand der Bordbatterie.

3. Fahrzeug nach einem der vorhergehenden Ansprüche, **dadurch gekennzeichnet, dass** der Überwachungscomputer (CS) einen Speicher umfasst, der so konfiguriert ist, dass er bei jedem Fortbestehen der verifizierten Warnung dauerhaft und kumulativ einen Fehlercode speichert.

4. Fahrzeug nach einem der vorhergehenden Ansprüche, **dadurch gekennzeichnet, dass** der Überwachungscomputer (CS) so konfiguriert ist, dass er einen eingeschränkten Betriebsmodus des Fahrzeugs (V) einleitet, wenn das Fortbestehen der Warnung nachgewiesen wird.

5. Fahrzeug nach Anspruch 4, wobei das Fahrzeug unsichere elektrische Geräte umfasst, **dadurch gekennzeichnet, dass** der Überwachungscomputer (CS) so konfiguriert ist, dass der herabgesetzte Modus die Deaktivierung der unsicheren elektrischen Geräte umfasst.

6. Fahrzeug nach Anspruch 4 oder 5, wobei das Fahrzeug einen Elektromotor (MM) umfasst, der über das erste Stromnetz mit Strom versorgt wird, **dadurch gekennzeichnet, dass** der Überwachungscomputer (CS) so konfiguriert ist, dass der heruntergefahrene Modus eine Leistungsbegrenzung ungleich Null umfasst wird vom Elektromotor (MM) verbraucht, solange der Ladezustand der Netzbatterie (BR2) unbedingt über dem vorgegebenen Schwellenwert liegt.

7. Fahrzeug nach Anspruch 6, **dadurch gekennzeichnet, dass** das Fahrzeug ausschließlich über Elektroantrieb verfügt.

8. Fahrzeug nach Anspruch 7, **dadurch gekennzeichnet, dass** die elektrische Antriebsmaschine (MM) die einzige Antriebsmaschine ist.

9. Fahrzeug nach Anspruch 8, **dadurch gekennzeichnet, dass** der Überwachungscomputer (CS) so konfiguriert ist, dass die Begrenzung der vom Elektromotor (MM) verbrauchten Leistung vom Ladezustand der Nutzbatterie (BR2) abhängt.

10. Fahrzeug nach Anspruch 8 oder 9, **dadurch gekennzeichnet, dass** der Überwachungsrechner (CS) so konfiguriert ist, dass die Begrenzung der vom Elektromotor (MM) aufgenommenen Leistung zwischen 4 kW und 8 kW liegt.

## Claims

1. Vehicle comprising:
- a current converter (C1) comprising a converter control device (OBCDC),
- a vehicle supervision computer (CS) connected to the converter control device (OBCDC),
- a first electrical network and a second electrical network interconnected by the current converter (C1),
this second electrical network comprising a utility battery (BR2) recharged by the current converter (C1), the converter control device (OBCDC) being arranged so as to send an alert to the supervision computer (CS) in the event of a malfunction in the charging of the utility battery by the current converter (C1), the supervision computer (CS) being configured so as to check the persistence of the alert after a predetermined time, **characterized in that** the vehicle (V) comprises a box (BECB) for determining the state of charge of the utility battery (BR2) connected to the supervision computer (CS), the supervision computer (CS) being configured so as to control the immobilization of the vehicle (V) when the state of charge of the utility battery (BR2) is lower than a predetermined threshold and the persistence of the alert is verified.

2. Vehicle according to claim 1 comprising a dashboard, **characterized in that** the supervision computer (CS) is configured so as to emit an alert signal to the dashboard when the persistence of the alert is verified, and independently of the state of charge of the house battery.

3. Vehicle according to one of the preceding claims, **characterized in that** the supervision computer (CS) comprises a memory configured so as to permanently and cumulatively store a fault code each time the verified alert persists.

4. Vehicle according to one of the preceding claims, **characterized in that** the supervision computer (CS) is configured so as to initiate a degraded operating mode of the vehicle (V) if the persistence of the alert is verified.

5. Vehicle according to claim 4, the vehicle comprising unsafe electrical equipment, **characterized in that** the supervision computer (CS) is configured so that the degraded mode includes deactivation of the unsafe electrical equipment.

6. Vehicle according to claim 4 or 5, the vehicle comprising an electric motor machine (MM) powered by the first electrical network, **characterized in that** the supervision computer (CS) is configured so that the degraded mode includes a non-zero limitation of the power consumed by the electric motor machine (MM) as long as the state of charge of the utility battery (BR2) is strictly greater than the predetermined threshold.

7. Vehicle according to claim 6, **characterized in that** the vehicle has only electric power.

8. Vehicle according to claim 7, **characterized in that** the electric driving machine (MM) is the only driving machine.

9. Vehicle according to claim 8, **characterized in that** the supervision computer (CS) is configured so that the limitation of the power consumed by the electric motor machine (MM) is a function of the state of charge of the utility battery ( BR2).

10. Vehicle according to claim 8 or 9, **characterized in that** the supervision computer (CS) is configured so that the limitation of the power consumed by the electric motor machine (MM) is between 4KW and 8KW.
